# NOUVEAU FASCICULE DE BREVET EUROPEEN

(11) **EP 2 809 887 B2**
(45) Date de publication et mention de la décision concernant l'opposition: **18.09.2019**
(45) Mention de la délivrance du brevet: 28.09.2016
(21) Numéro de dépôt: 13704197.6
(22) Date de dépôt: 24.01.2013
(51) Int. Cl.: F01D 11/00, B23H 9/10, B23Q 3/06

(54) **PROCEDE D'USINAGE D'UNE AUBE DE TURBOMACHINE**
MASCHINENBEARBEITUNGSVERFAHREN EINER TURBOMASCHINENSCHAUFEL
TURBOMACHINE BLADE MACHINING PROCESS

(30) Priorité: 02.02.2012 FR 1251000
(43) Date de publication de la demande: 10.12.2014
(73) Titulaire: Safran Aircraft Engines, 75015 Paris (FR)
(72) Inventeur: HANSOM, Michael, F-77550 Moissy-Cramayel Cedex (FR); TRAN, Huu-Thanh, F-77550 Moissy-Cramayel Cedex (FR); BARIAUD, Christian, F-77550 Moissy-Cramayel Cedex (FR)
(74) Mandataire: David, Alain
(86) Numéro de dépôt international: PCT/FR2013/050146
(87) Numéro de publication internationale: WO 2013/114024

(56) Documents cités:
- EP-A1- 1 170 648
- EP-A2- 0 851 096
- FR-A1- 2 956 996
- US-A1- 2004 247 442
- US-B2- 7 214 034
- US-B2- 7 214 034

## Description

### Arrière-plan de l'invention

La présente invention se rapporte au domaine général des turbines à gaz pour moteurs d'avions ou d'hélicoptères et concerne plus particulièrement un procédé de fabrication d'aubes permettant une minimisation des contraintes et de sa masse lors de son usinage.

De façon connue en soi, les aubes sont des pièces particulièrement complexes dont la fabrication selon un processus de fonderie long et coûteux s'avère délicate du fait notamment des tolérances de fabrication demandées.

Une pièce de fonderie du fait de ses tolérances dimensionnelles de l'ordre du millimètre et de son état de surface est rarement une pièce utilisable directement. Elle doit donc au moins en partie être ensuite usinée (typiquement sur un centre d'usinage à commande numérique), ce qui nécessite le recours à un référentiel géométrique spécifique à cet usinage. Or, pour exécuter ces opérations d'usinage, il est nécessaire de choisir un système de positionnement de la pièce dans le centre d'usinage qui soit optimal et garantisse la précision demandée tout en en permettant un contrôle aisé. Ce système de positionnement doit en outre respecter le principe de l'isostatisme, c'est-à-dire qu'il doit permettre de positionner sans ambiguïté la pièce dans l'espace, généralement en 6 points d'appui judicieusement répartis, de sorte notamment à maximiser la distance entre eux. Ces points d'appui qui demeureront une fois la pièce usinée ne sont en pratique pas ponctuels mais de petites dimensions finies, toutefois suffisantes pour se rapprocher du cas ponctuel idéal. Un dispositif de maintien d'une aube lors de l'usinage de son pied est divulgué dans FR 2956 996.

Or, les aubes mobiles de turbines, par exemple, sont généralement de petites dimensions de sorte qu'il existe une difficulté à effectuer une maximisation des distances entre les points d'appui et cela d'autant plus que ces points d'appui de taille non nulle génèrent une masse supplémentaire.

### Obiet et résumé de l'invention

La présente invention a donc pour but principal de pallier de tels inconvénients en proposant un procédé d'usinage d'aubes qui permet de notablement minimiser les concentrations de contraintes mécaniques tout en assurant un gain de masse.

Ce but est atteint grâce à un procédé d'usinage dans un centre d'usinage tridimensionnel d'une aube comprenant une pale aérodynamique, une plateforme sous les parties amont et aval de laquelle sont formés des supports pour une chemise d'étanchéité, un pied d'aube et une échasse interposée entre ladite plateforme et ledit pied d'aube, caractérisé en ce que lesdits supports constituent aussi deux points d'appui pour un système de positionnement en 6 points de ladite aube dans ledit centre d'usinage tridimensionnel.

Ce cumul de la fonction de support et de point d'appui permet en limitant les concentrations de contraintes mécaniques sur l'aube de simplifier la gamme d'usinage et d'obtenir en sus le gain de masse désiré.

Selon une disposition avantageuse, lesdits points d'appui sont formés du côté de l'extrados de ladite échasse.

### Brève description des dessins

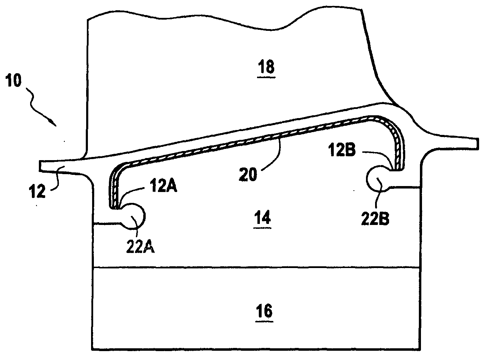

D'autres caractéristiques et avantages de la présente invention ressortiront de la description faite ci-dessous, en référence à la figure unique annexée qui en illustre un exemple de réalisation dépourvu de tout caractère limitatif.

### Description détaillée de modes de réalisation

La figure unique représente en élévation une aube 10 de turbomachine, par exemple de soufflante, de turbine ou de compresseur, fixée de façon connue sur le pourtour d'un disque de rotor de turbomachine (non représenté) et comprenant typiquement sous une plateforme 12 séparée d'elle par une échasse 14, un pied d'aube 16 en forme de sapin ou de queue d'aronde venant se loger dans une rainure ou alvéole correspondante (non représentée) du pourtour du disque de rotor.

L'échasse 14 présente une épaisseur réduite par rapport au pied d'aube 16 afin de traverser l'ouverture définie par la rainure et permettre la liaison mécanique entre le pied et la partie aérodynamique (ou pale 18) de l'aube. Sous la plateforme sont disposés classiquement, respectivement en amont et en aval (par rapport au flux d'air traversant les aubes), des supports 12A, 12B pour une chemise d'étanchéité 20.

Afin de permettre l'usinage d'une telle aube, il est nécessaire de définir des faces de références qui seront les faces de départ pour la cotation de la pièce et des points d'appui qui serviront de point de référence pour cet usinage et pour le contrôle ultérieur de la pièce. Classiquement ces points d'appui répartis tout autour de la pièce à usiner sont au nombre de six et font partie d'un système de positionnement en 6 points permettant l'usinage de la pièce dans un centre d'usinage tridimensionnel.

Selon l'invention, la face latérale de l'échasse 14 du coté extrados est choisie comme face de référence et les supports amont et aval de la chemise d'étanchéité sont aussi utilisés comme points d'appui 22A, 22B pour le système de positionnement en 6 points de l'aube dans le centre d'usinage tridimensionnel, les quatre autres points d'appui étant répartis sur les autres faces de l'aube. Avec cette configuration, ces deux points d'appui sont relativement peu éloignés du bord de l'échasse maximisant ainsi l'écartement entre eux. Les concentrations de contraintes résultant de l'abondance des rayonnages de faible valeur déjà présents au pied des appuis de la chemise d'étanchéité 20 ne sont ainsi pas augmentées du fait du regroupement de ces rayonnages avec ceux résultant des appuis et la masse globale de l'aube est en outre réduite du fait de la coïncidence des fonctions de support et d'appui réunies en ces deux points.

## Revendications

1. Procédé d'usinage dans un centre d'usinage tridimensionnel d'une aube (10) comprenant une pale aérodynamique (18), une plateforme (12) sous les parties amont et aval de laquelle sont formés respectivement des supports amont et aval (12A, 12B) pour une chemise d'étanchéité (20), un pied d'aube (16) et une échasse (14) interposée entre ladite plateforme et ledit pied d'aube, **caractérisé en ce que** lesdits supports amont et aval constituent aussi deux points d'appui (22A, 22B) pour un système de positionnement au nombre de 6 points d'appui de ladite aube dans ledit centre d'usinage tridimensionnel.

2. Procédé d'usinage selon la revendication 1, **caractérisé en ce que** lesdits points d'appui sont formés du côté de l'extrados de ladite échasse.

3. Procédé d'usinage selon la revendication 1 ou la revendication 2, **caractérisé en ce que** ledit système de positionnement au nombre de 6 points d'appui de ladite aube dans ledit centre d'usinage tridimensionnel comporte une face de référence constituée par la face latérale du côté extrados de ladite échasse.

## Patentansprüche

1. Verfahren zur Bearbeitung, in einem Zentrum zur dreidimensionalen Bearbeitung, einer Schaufel (10), die ein aerodynamisches Blatt (18), eine Plattform (12), unter deren stromauf- und stromabwärtigen Teilen ein stromaufwärtiger bzw. ein stromabwärtiger Halter (12A, 12B) für einen Dichtungsmantel (20) ausgebildet sind, einen Schaufelfuß (16) sowie eine Stelze (14), die zwischen der Plattform und dem Schaufelfuß eingefügt ist, umfasst, **dadurch gekennzeichnet, dass** der stromaufwärtige und der stromabwärtige Halter auch zwei Auflagepunkte (22A, 22B) für ein Positionierungssystem mit einer Anzahl von 6 Auflagepunkten der Schaufel in dem Zentrum zur dreidimensionalen Bearbeitung bilden.

2. Bearbeitungsverfahren nach Anspruch 1, **dadurch gekennzeichnet, dass** die Auflagepunkte auf der Seite der Rückseite der Stelze ausgebildet sind.

3. Bearbeitungsverfahren nach Anspruch 1 oder Anspruch 2, **dadurch gekennzeichnet, dass** das Positionierungssystem mit einer Anzahl von 6 Auflagepunkten der Schaufel in dem Zentrum zur dreidimensionalen Bearbeitung eine Referenzfläche umfasst, die durch die Seitenfläche der rückseitigen Seite der Stelze gebildet ist.

## Claims

1. A method of machining a blade (10) in a three-dimensional machining center, the blade (10) comprising an airfoil (18), a platform (12) having upstream and downstream supports (12A, 12B) formed respectively under the upstream and downstream portions thereof for supporting a sealing liner (20), a blade root (16), and a stilt (14) interposed between said platform and said blade root, the method being **characterized in that** said upstream and downstream supports also constitute two bearing points (22A, 22B) for a six bearing points positioning system for positioning said blade in said three-dimensional machining center.

2. A machining method according to claim 1, **characterized in that** said bearing points are formed on the suction side of said stilt.

3. A machining method according to claim 1 or claim 2, **characterized in that** said six bearing points positioning system for positioning said blade in said three-dimensional machining center comprises a reference face constituted by the lateral surface of the suction side of said stilt.
